# EUROPEAN PATENT SPECIFICATION

(11) **EP 1 407 926 B1**
(45) Date of publication and mention of the grant of the patent: **19.03.2008**
(21) Application number: 02732787.3
(22) Date of filing: 12.06.2002
(51) Int. Cl.: B60N 2/48, A47C 7/38

(54) **PORTABLE TRAVELER HEADREST**
TRAGBARE REISE-KOPFSTÜTZE
APPUI-TETE PORTATIF POUR LE VOYAGE

(30) Priority: 13.06.2001 ES 200101433; 26.12.2001 ES 200200094
(43) Date of publication of application: 14.04.2004
(73) Proprietor: Industrias Medicas Quirurgicas Canarias S.L., 35300 Santa Brigida (Las Palmas) (ES)
(72) Inventor: CARTA GONZALEZ, Jose, Antonio, E-35300 Santa Brigida, Las Palmas (ES); GARCES MARTIN, Gerardo, E-35300 Santa Brigida, Las Palmas (ES)
(74) Representative: Carpintero Lopez, Francisco
(86) International application number: PCT/ES2002/000291
(87) International publication number: WO 2002/100680

(56) References cited:
- WO-A-02/24031
- US-A- 2 460 942
- US-A- 2 501 993
- US-A- 2 642 927
- US-A- 2 869 621
- US-A- 3 271 072
- US-A- 5 868 471

## Description

The present invention relates to a portable traveller headrest whose purpose is to provide the user with a support system for the head to prevent its uncontrolled sideways movements, that can be used on any seat and removed at will. This system is fundamentally aimed at users of public transport (planes, ships, trains), waiting rooms and at people who have difficulty in voluntarily controlling their head movements, due to weakness of the cervical muscles.

### BACKGROUND TO THE INVENTION

Millions of travellers in public transport, especially in journeys of a determined duration, make use of the time to sleep reclining their head on the seat rest. The shape of this later only allows the back part of the head to be supported, because of which, after loosing muscular control during sleep, the head is then subject to abrupt sideways movements, or to sustained positioning in non-anatomic postures. In the best of cases the consequence is usually significant discomfort that prevents adequate sleep, including on occasion pstuducing the appearance of cervical lesions.

Some of these seats have an ergonomic design and have a degree of concavity for accommodating the head and lessen its uncontrolled movement during sleep. Some even have "flaps" incorporated, of variable position, adjustable within a certain range of angle, as the user requires. There even exist portable adjustable headrests as disclosed in US 2,869,621, However, a light non-metallic portable system, of reduced dimensions, that the user can quickly and easily attach and unattach to a wide range of seat backrests, without altering the configuration of these allowing both its fixing at various heights of the backrest, in order to adapt itself to different user heights, and the control of the opening angle of the side headrests to adapt itself to the ergonomic necessities of the user, does not exist.

### DESCRIPTION OF THE INVENTION

The portable traveller headrest consists of a device that can easily be positioned and removed by the user of the seat backrest, as well as being readily adjustable to his needs, without altering the shape of the seat.

The portable traveller headrest can be removed and transported in a small-sized holder, thanks to its hinged configuration.

The portable traveller headrest is made up of a support bar, two headrest parts, and a double securing mechanism.

The support bar, fabricated of light, rigid and resistant material, consists of a narrow bar, of rectangular section with a ribbed configuration. In one of its two sides, at the areas near to each of its ends, said support has a semi-cylindrical projection parallel to the edge of its section, with polygonal axial holes that allows mounting of the side headrest parts in the position required by the user. Likewise the support bar has four cylindrical holes perpendicular to its faces, two of them situated between the two semi-cylindrical projections, and the other two between these and the ends of the support bar, the purpose of these being to allow the connection of the apparatus entrusted with securing it, by pressure, to seat backrests of different thicknesses. It will be possible to bend this transverse bar at its centre to allow it to be folded about itself, reducing its length. For the installation of the device the support bar must make contact with the seat backrest; being transversely oriented to its vertical axis of symmetry and situated at the height of the user's neck.

To secure the system formed by the support bar and the two side headrests to the seat backrest the securing mechanism is used.

The securing mechanism consists of four pieces of rectangular section that are mounted forming two identical mechanisms, similar to a inverted and asymmetric U.

Each inverted and asymmetric U-shaped mechanism has five parts. Two parts in the shape of an inverted L, two flat nuts knurled at the sides, and a square-headed bolt. In the longer section of the larger L-piece there is a longitudinal central slot, that passes through it, and that has a depression in its back face, centred with said slot; in its shorter section, on the upper face, it has two continuous projections lengthwise along its sides, and a threaded stud perpendicular to said face at its end. This face can have projections or bas-reliefs to assist in the securing of the shorter L-part. This is narrower than the larger L-part, and has a longitudinal central slot in its upper section, into which the threaded stud of the other part is inserted.

These U-shaped mechanisms are formed by inserting the threaded stud into the larger L-piece through the slot in the smaller L-piece. Both pieces remain fixed by means of the flat nut with the knurled side; the relative turning of both pieces being prevented thanks to the continuous projections that the big piece has along its length.

Each inverted and asymmetric U-shaped mechanism connects with the support bar by means of a square-headed bolt that, after having been inserted into the slot of the larger L piece, and having passed through one of the circular holes that the support bar has at its ends, is bolted with its corresponding nut and blocks the relative movement of the assembly, according to the model of seat backrest where it is wished to install it.

These inverted and asymmetric U-shaped mechanisms, joined to the support bar, fit loosely onto the top of the seat backrest and secure the system to it, when the user, by pressing on the corners of the U-mechanisms, shortens the central sections of said mechanisms, sliding one over the other and locks them by means of the manual pressure on the two knurled flat nuts.

The adjustment of the vertical position of the support bar on the seat backrest is carried out by moving said bar along the longitudinal slots of the longer sections of the larger L-pieces, and locking its position by manually pressure on the two nuts on the bolts that pass through one of the holes of the support bar and the longitudinal slot of the larger L-pieces.

The side headrest parts consist of light ribbed narrow plates of rigid material, coated with the coverings necessary to achieve the adequate retention of solid, liquid or gaseous type flexible material placed on the head support surface.

Once the support bar has been secured to the seat backrest using the U-mechanisms, the side headrest parts can be connected and disconnected from it, and can even be made to pivot, thanks to the polygonal shape of one of the two extended sections that one of the edges of the rigid plate has. The rigid plate of the side headrest extends from the upper cylindrical section, that is of greater diameter, through a generatrix. The lower section forms the pivoting part of the side headrest and it has dimensions such that it can be inserted, with minimum looseness, into one of the coaxial polygonal drilled holes passing through the semi-cylindrical projections of the support bar.

### BRIEF DESCRIPTION OF THE DRAWINGS

For better understanding a number of drawings are attached, in which is represented, solely by way of example, a practical case of embodiment of the portable traveller headrest, in the European system.

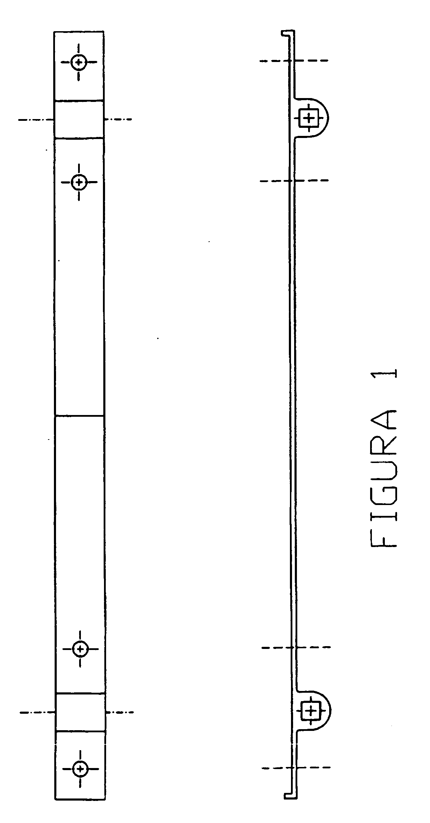

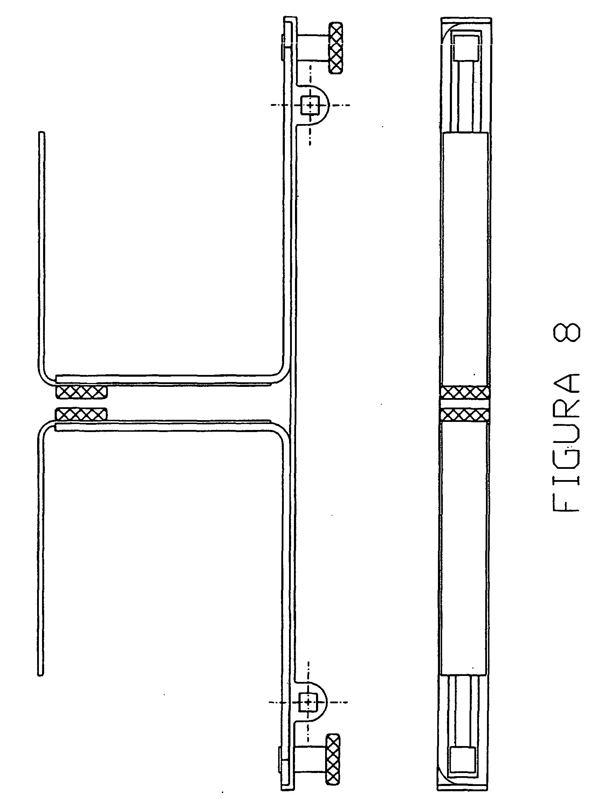

In said drawings Figure 1 is an elevation view and an upper view of the support bar, where one possible aspect of the polygonal holes for connecting the side headrest has been shown; Figure 2 shows the elevation view, upper view, right side view, and left side view of the larger L-piece of the U-mechanism; Figure 3 is the elevation view, left side view and upper view of the smaller L-piece of the U-mechanism; Figure 4 is the elevation view and the upper view of one of the square-headed bolts that join one of the U-mechanisms with the support bar; Figure 5 is the elevation view and the upper view of the knurled bolts for joining the two L-pieces of the securing mechanism; Figure 6 is the elevation view and the upper view of the bolt that joins the U-mechanisms with the support bar; Figure 7 is the elevation view, side view and upper view of one of the headrest elements. Figure 8 is the elevation view, right side view and upper view of the portable headrest device in its storage configuration (without the side headrests), with the U-mechanisms turned at 90 degrees at their joints with the support bar, with respect to its mounting configuration; and Figure 9 is a perspective view of the portable traveller headrest in which the various possible movements of the L-pieces that form the U-mechanisms can be seen, and in which a possible way of realisation of the head support flexible material has been included.

### DESCRIPTION OF A PREFERABLE EMBODIMENT

The portable traveller headrest in question has a support bar (1), two headrest elements (2) and the securing mechanism, formed by ten removable parts; all of them made from material of light specific weight, and with the adequate thickness and ribbing to provide the necessary rigidity. All of the components of the device will have all edges rounded so that they don't entail any danger of cutting, puncturing or punching.

The support bar (1) formed by a rectangular section thin bar of ribbed configuration, of resistant, light, non-metallic material, has near to each of its longitudinal ends a semi-cylindrical projection, parallel to the edge of its section, with an polygonal axial perforation that allows the mounting of the side headrest elements in the angular position required by the user. The support bar (1) has four cylindrical holes perpendicular to its faces, two of them situated between the two semi-cylindrical projections and the other two between these and the end of the support bar, their function being to allow the connection of the mechanism entrusted with securing it, by pressure, to seat backrests of different thickness. For installing the device the support bar (1) must be in contact with the seat backrest; its vertical axis of symmetry being transversally oriented and with it placed at the level of the user's neck. The support bar (1) will be divided into two parts joined by a hinge that allows one to be folded over the other in order to reduce its length.

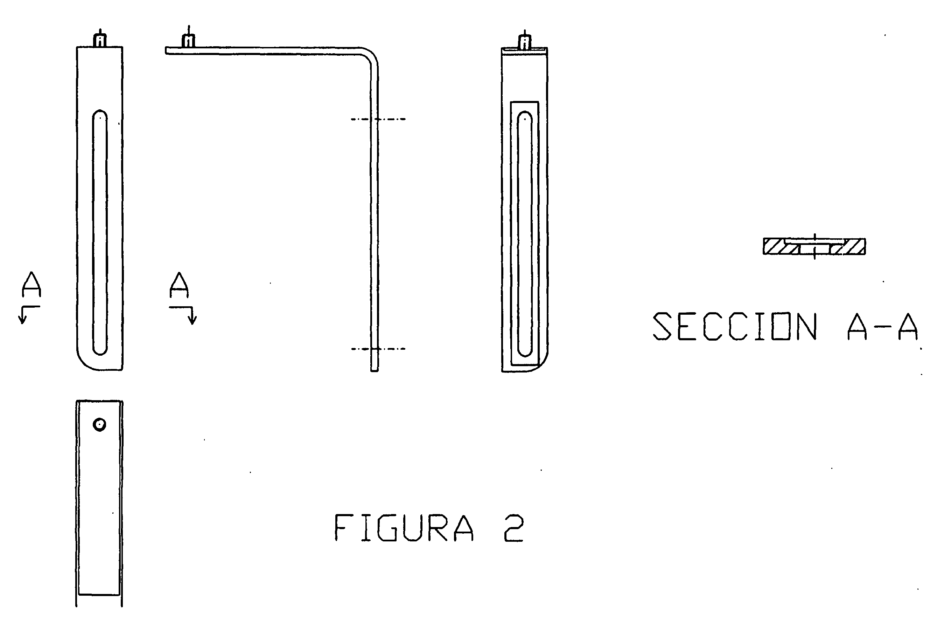

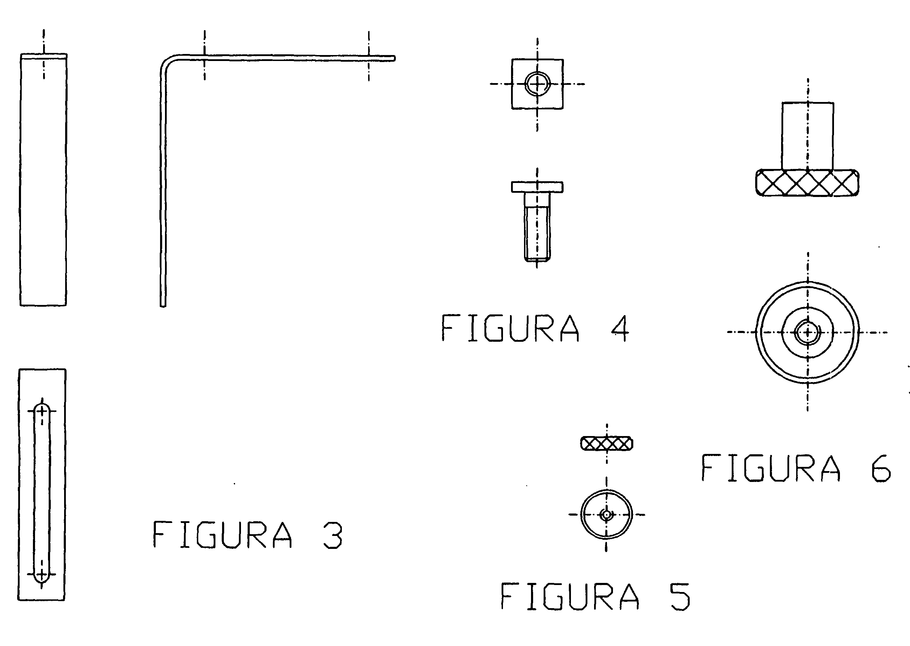

To secure the system formed by the support bar (1) and the two side headrests elements (2) to the seat backrest two identical securing mechanisms (3), of inverted and asymmetric U-shape, are used; each of these has five pieces. Two pieces form the inverted L (fig.2,3) a knurled edge flat nut (fig 5), a square-headed bolt (fig 4), and a cap nut (fig.6) that has a knurled edge cylindrical end and a smooth cylindrical body of lesser diameter. The larger section of the larger L-piece (fig.2) has a central longitudinal slot made in it, and in its back face it has a depression centred with said slot; the smaller section (fig.3) has two guides that are continuous along its lengthwise edges on its upper face, and a threaded stud perpendicular to said face at its end. The smaller L-piece (fig. 3) of the U-mechanisms (3) is narrower than the larger L-piece (fig. 2), in order to seat loosely between its continuous guides, and it has a central longitudinal slot in one of its sections.

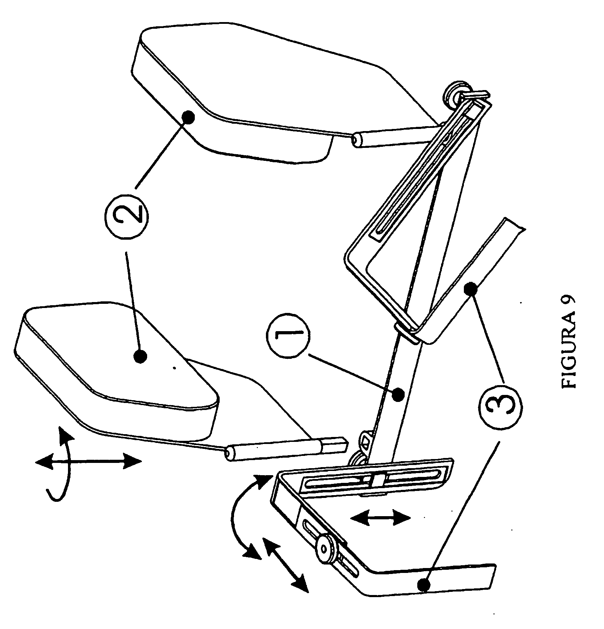

These U-shaped mechanisms (3) are formed (fig. 9) by inserting the threaded stud into the larger L-piece through the slot in the smaller L-piece. Both pieces remain secured by means of the knurled side flat nut, the relative rotation of both pieces being prevented thanks to the continuous projections that the large piece has along its length.

These inverted asymmetric U-shaped mechanisms (3) connect with the support bar (1) by means of square-headed bolts that, after having been inserted through the longitudinal slots of the larger L-pieces and passing through two of the cylindrical holes that the support bar has, in its inner part or at its ends, depending on the width of the seat backrest, are bolted with their corresponding nuts and block any relative movement of the assembly formed by the U-mechanisms and the support bar.

These inverted asymmetric U-shaped mechanisms (3) fit loosely onto the top of the seat backrest and secure the support bar (1) to its backrest when the user, by pressing on the corners of the U-mechanisms (3), shortens the upper sections of said mechanisms, and locks them by manually pressure on the two knurled flat nuts.

The adjustment of the vertical position of the support bar on the seat backrest is carried out by moving said bar along the longitudinal slots of the longer sections of the larger L-pieces, and fixing its position by manually pressure on the two nuts

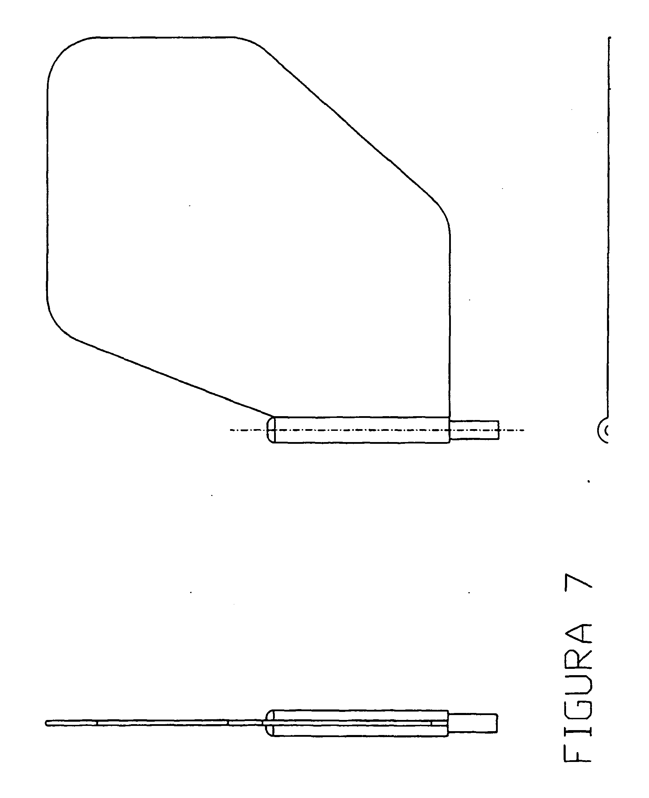

The side headrest elements (fig.7) consist of ribbed thin plates of light rigid material, lined with the covering necessary to achieve the proper retention of the solid, liquid or gaseous type flexible material placed in the head support surface.

Once the support bar has been fixed to the seat backrest using the U-mechanisms (3), the side headrest elements (2) can be connected and disconnected to or from it by sliding, and they can even be made to pivot, thanks to the polygonal shape that one of the two extended sections that one of the edges of the rigid plate has. The rigid plate of the side headrest extends from the cylindrical upper section that is of greater diameter. The lower section forms the pivoting part of the side headrest and it has dimensions such that it can be inserted, with minimal looseness, into one of the coaxial polygonal holes drilled through the semi-cylindrical projections of the support bar.

## Claims

1. Portable traveller headrest consisting of a device with a light structure, made of low specific weight non-metallic material, with a ribbed support bar (1) of narrow rectangular section and having sets of cylindrical holes where two devices are hinged, that fit onto the upper edge of seat backrests of different thicknesses and widths, and keep the assembly fixed to them, that can easily be placed and removed by the user on seat backrests, readily adjusting it to his needs, without altering the shape of the seats to which it fits, likewise removing and folding it, thanks to its hinged configuration, for its transport in a small sized holder, **characterised in that** it has two semi-cylindrical projections with polygonal holes near to its lengthwise ends, where two side headrest elements (2) are attached at the angular position selected by the user.

2. Portable traveller headrest, according to claim 1, **characterised in that** the side headrest elements (2) is formed by two light rigid thin plates, lined with a covering for properly holding the cushioning material, whether solid-spongy or air, that is placed in the head support surface; and that it can pivot with respect to the support bar (1) and be fixed in the horizontal opening angle, with respect to the backrest surface, that the user may select.

3. Portable traveller headrest, according to any of the preceding claims, **characterised in that** its securing to the backrest of the seats is carried out with a device formed by two inverted U-shaped mechanisms (3) joined by the transverse support bar (1); the U-shaped mechanisms are each formed by two independent L-pieces, that slide over each other, allowing the width of the U to be increased or diminished, thus adapting itself to seats of different thicknesses. The sliding between the L-pieces is possible thanks to the existence of a longitudinal slot in one of them, through which a threaded stud, existing in the other piece, is inserted, the securing between both of them being assured by means of a nut.

4. Portable traveller headrest, according to any of the preceding claims, **characterised in that** the larger larger L- pieces of each of the U-mechanisms situated in the user's body trunk plane, that are used for hinging with the transverse support bar (1), have longitudinal slot that allows said larger L - pieces to be fixed at different seat backrest heights, as the user wishes. The locking between the support bar (1) and the U-mechanisms (3) is carried out by means of a nut and bolt system.

5. Portable traveller headrest, according to claim **1, characterised by** the fact that the support bar (1) can be divided into two pieces joined by a hinge that allows one of them to be folded over the other with the aim of reducing the length of the bar.

## Patentansprüche

1. Tragbare Reisekopfstütze bestehend aus einer Vorrichtung mit einer dünnen Struktur, die aus einem nichtmetallischen Material mit geringem spezifischen Gewicht hergestellt ist, mit einer gerippten Halteschiene (1) aus einem schmalen rechteckigen Querschnitt und umfassend Sätze von zylindrischen Löchern in denen zwei Vorrichtungen drehbar angebracht sind, die auf die Oberkante von Rückenlehnen verschiedener Dicke und Breite passen und die Anordnung fest zu diesen halten, die einfach an den Rückenlehnen von einem Benutzer angebracht und entfernt werden kann, wobei er, ohne eine Änderung der Form der Sitze, an denen sie angebracht ist, sie einfach dem Benutzerbedarf anpassen kann, sie gleichermaßen entfernen und zu seinem Transport, dank der drehbaren Ausgestaltung, zu einen kleinen Griff falten kann,
**dadurch gekennzeichnet, dass**
sie zwei halbzylindrische Vorsprünge mit polygonalen Löchern in der Nähe von ihren längstgerichteten Enden aufweist, an denen zwei Kopfstützenseitenelemente (2) in der von dem Benutzer gewählten abgewinkelten Position angebracht sind.

2. Tragbare Reisekopfstütze nach Anspruch 1,
**dadurch gekennzeichnet, dass**
die Kopfstützenseitenelemente (2) aus zwei leichten, starren, dünnen Platten, ausgekleidet mit einem Überzug für angemessenes Halten des Polstermaterials, ob fest-schwammig oder Luft, das an der Kopfhaltefläche angebracht ist, gebildet sind; und dass sie sich in Bezug zur Halteschiene (1) drehen kann und in einem horizontalen Öffnungswinkel in Bezug zur Rückenlehnenoberfläche, den der Benutzer wählen kann, befestigt wird,.

3. Tragbare Reisekopfstütze nach einem der vorherigen Ansprüche,
**dadurch gekennzeichnet, dass**
ihre Sicherung zu der Rückenlehne der Sitze durch eine Vorrichtung, gebildet aus zwei umgedrehten U-förmigen Einrichtungen (3), die durch die querlaufende Halteschiene (1) verbunden sind, durchgeführt ist; die U-förmigen Einrichtungen sind jeweils gebildet aus zwei unabhängigen L-Stücken, die übereinander gleiten, wobei sie es ermöglichen, die Breite der Us zu erhöhen und zu verringern, sich somit an die Sitze mit unterschiedlicher Dicke anzupassen. Das Gleiten zwischen den L-Stücken ist dank des Vorhandenseins eines Längsschlitzes in einem von diesen möglich, durch den ein Gewindebolzen, vorhanden in dem anderen Stück, eingesteckt ist, wobei die Sicherung zwischen beiden durch eine Schraubenmutter sichergestellt ist.

4. Tragbare Reisekopfstütze nach einem der vorherigen Ansprüche,
**dadurch gekennzeichnet, dass**
die größeren L-Stücke von jedem der U-Einrichtungen, die sich in der Rumpfebene des Benutzers befinden und zum Einhängen mit der querlaufenden Halteschiene (1) verwendet werden, einen Längsschlitz umfassen, der den größeren L-Stücken ermöglicht, an verschiedenen Rücklehnensitzhöhen befestigt zu werden, wie der Benutzer wünscht. Das Verriegeln zwischen der Halteschiene (1) und den U-Einrichtungen (3) wird durch ein Schraubenmutter/Bolzen-System durchgeführt.

5. Tragbare Reisekopfstütze nach Anspruch 1,
**dadurch gekennzeichnet, dass**
die Halteschiene (1) in zwei Teile geteilt werden kann, die durch ein Gelenk verbunden sind, das es einem von diesen Teilen ermöglicht, über den anderen gefaltet zu werden mit dem Ziel, die Länge der Schiene zu reduzieren.

## Revendications

1. Repose-tête de voyage, portable, formé d'un dispositif de structure légère en une matière non métallique légère, ayant
une barre de support (1), nervurée, de faible section rectangulaire et un jeu d'orifices cylindriques dans lesquels sont articulés deux dispositifs qui s'adaptent sur le bord supérieur de dossier de sièges de différentes épaisseurs et largeurs et y maintenant l'assemblage fixé, que l'utilisateur peut facilement placer et enlever des dossiers, régler facilement selon ses besoins sans endommager les sièges le recevant, tout en pouvant l'enlever et le replier, grâce à sa forme articulée, pour le transporter dans un étui de petites dimensions,
**caractérisé en ce qu'**
il comporte deux parties en saillie, semi-cylindriques, avec des orifices polygonaux, près des extrémités longitudinales, auxquelles se fixent deux éléments d'appui-tête latéraux (2) dans la position angulaire choisie par l'utilisateur.

2. Repose-tête de voyage ; portable, selon la revendication 1,
**caractérisé en ce que**
les éléments d'appui-tête latéraux sont constitués par deux minces plaques rigides, légères, recouvertes d'un revêtement pour retenir de façon appropriée une matière de rembourrage, soit une matière solide spongieuse, soit de l'air, dans la surface de soutien de tête et
ils peuvent pivoter par rapport à la barre de support (1) et être fixés suivant un angle d'ouverture horizontal choisi par l'utilisateur par rapport à la surface du dossier.

3. Repose-tête de voyage, portable, selon l'une quelconque des revendications précédentes,
**caractérisé en ce que**
sa fixation au dossier de sièges se fait avec un dispositif composé de deux mécanismes (3) en forme de U inversé, réunis par la barre de support, transversale (1), les mécanismes en U étant formés chacun par deux pièces en L, indépendantes, qui glissent l'une sur l'autre, permettant d'augmenter ou de diminuer la largeur de la forme en U, pour l'adapter à des sièges d'épaisseurs différentes, le glissement entre les pièces en L étant possible grâce à l'existence d'une fente longitudinale dans l'une des pièces, recevant une vis faisant partie de l'autre pièce, la fixation entre les deux pièces étant assurée par un écrou.

4. Repose-tête de voyage, portable, selon l'une quelconque des revendications précédentes,
**caractérisé en ce que**
les plus grandes pièces en forme de L de chaque mécanisme en forme de U, situées dans le plan du corps de l'utilisateur, servent à l'accrochage à la barre de support, transversale, (1) et présentent une fente longitudinale qui permet aux grandes pièces en forme L, d'être fixées à différentes hauteurs de dossier de sièges selon le souhait de l'utilisateur, le verrouillage ente la barre de support (1) et les mécanismes en U (3) se faisant à l'aide d'un écrou et d'une vis.

5. Repose-tête de voyage, portable, selon la revendication 1,
**caractérisé en ce que**
la barre de support (1) peut être divisée en deux pièces réunies par une articulation qui permet à l'une d'être repliée par-dessus l'autre pour réduire la longueur de la barre.
